Europäisches Patentamt

(19)　European Patent Office

Office européen des brevets

(11)　**EP 1 019 811 B1**

(12)　**EUROPEAN PATENT SPECIFICATION**

(45) Date of publication and mention
of the grant of the patent:
**05.11.2003　Bulletin 2003/45**

(51) Int Cl.$^7$: **G06F 9/46**, G06F 17/30,
G06F 15/177

(21) Application number: **98942507.9**

(22) Date of filing: **09.09.1998**

(86) International application number:
**PCT/DK98/00383**

(87) International publication number:
**WO 99/013401 (18.03.1999 Gazette 1999/11)**

(54) **METHOD AND APPARATUS FOR PROCESSING A REQUEST TO A BOOLEAN RULE**

VERFAHREN UND GERÄT ZUR BEARBEITUNG EINER ANFRAGE GEMÄSS EINER
BOOLEANREGEL

PROCEDE ET DISPOSITIF SERVANT A TRAITER UNE DEMANDE SELON UNE REGLE
BOOLEENNE

(84) Designated Contracting States:
**AT BE CH CY DE DK ES FI FR GB GR IE IT LI LU
MC NL PT SE**

(30) Priority: **09.09.1997　DK 102997**

(43) Date of publication of application:
**19.07.2000　Bulletin 2000/29**

(73) Proprietor: **Baan Development B.V.**
**3770 AC Barneveld (NL)**

(72) Inventor: **SKOVGAARD, Hans, J rgen**
**DK-3520 Farum (DK)**

(74) Representative: **Wittrup, Flemming et al**
**Zacco Denmark A/S**
**Hans Bekkevolds Allé 7**
**2900 Hellerup (DK)**

(56) References cited:
**WO-A1-90/09001**

- **IEEE INTERNATIONAL CONFERENCE ON
HUMANS, INFORM. AND TECHNOLOGY,
Volume 1, 1994, YOUNG-MOON PARK et al., "A
New Approach to the Logic-Based Expert
System", pages 419-424.**
- **CONSTRAINT LOGIC PROGRAMMING/Edited by
FREDERIC BENHAMOD and ALAIN
COLMERAUER, Cambridge, Mass MIT c1993
(Logic Programming, 99-0618170-2), "Using
Enumerative Methods for Boolean Unifiction",
ANTOINE RAUZY, pages 237-251.**

**Description**

Field of the Invention

The invention relates to a method of processing a request to a Boolean rule having variables, by the use of an input signal having elements, a stored rule base having elements arranged in terms, and an output signal having elements; the elements in the rule base being capable of representing the Boolean states true or false for said variables, for an element in the rule base and an element in the input signal both representing a given variable, comparing the states of the input signal and the states of the terms in the rule base by means of logical operations; and updating the output signal with the result of the logical operations.

Background of the Invention

Special applications of processing a request to a rule are configuration systems.

General problems of configuration have three basic components: variables, values and rules. The goal is to find all assignments of the values to the variables such that all assignments are valid according the rules. This is called a constraint satisfaction problem, which is ubiquitous in the field of configuration. In configuration systems the variables represent selectable objects which may be included in a product upon a users selection if the constraints/rules are satisfied. Other often used terms for rules are e.g. 'Constraints' and 'Relations'.

The configuration problem is solved when the set of all selectable objects is completely divided into two disjunctive sub-sets representing objects that are included in the configuration and objects that are excluded from the configuration, respectively, without violating any of the rules between the selectable objects.

A selectable object is anything that can be included or excluded. It can be a physical object (e.g. a car or a specific kind of engine), an attribute (e.g. the color red or the texture pattern of a carpet) or something abstract (e.g. a specific number of trips between home and work or a particular type of contract).

A rule. involves one or more selectable objects. The purpose of the rule is to constrain the selection of objects to obey some requirements. A rule can be based on a physical limitation (e.g. if a car needs a large engine to support a large number of selected electrical accessories), or a discretionary decision (e.g. if marketing management decides that all cars having a particular large engine are produced only in red colour to give them a more sporty look). Often the term 'Constraint' is used to refer to a rule limiting how elements can be combined.

Typically the rule is stored in an expedient format in a rule base, i.e. some type of table or database. Access to the rule base is obtained by means of a configuration engine. The configuration engine is responsible for verifying whether selections made by the user are valid according to the rule and reporting this to the user. Further, the configuration engine can be capable of deducing further knowledge from the rule, i.e. logically to conclude about values of objects that the user not has decided upon yet.

The configuration engine can be implemented in numerous ways, however typically inspiration is obtained from the fields of search, comprising the fields: Constraint Logic Programming, Constraint Synthesis, Relational algebra, Propositional Logic, Integer programming, Graph theory, Predicate Calculus etc.

The characteristics of a search problem is proven to be NP-Hard, i.e. its run-time complexity is exponential meaning that time the algorithm execution times are exponential to the size of the problem for non-trivial problems. This is a very unfortunate property of the problem, which have sparked the large interest in the algorithms.

Typically, in configuration systems there is involved a large number of variables and the rule base should be consulted each time a user makes a selection in order to support and aid the user during the process of configuration. Further, today users expect very fast response times when using different types of computer programs (e.g. a program for doing configuration) they do not care about the underlying problem of configuration or any other type of technical aspect.

Prior Art

This invention relates to the European patent EP 0 456 675. EP 0 456 675 discloses a method and an apparatus for enhancing the information content of an input signal by the use of stored rule information, an input signal and an output signal. The rule information is obtained by converting a boolean rule having a number of variables into a plurality of terms representing all the possible combinations of the variables i.e. combinations of binary values assigned to the variables such that the boolean rule is not violated. This is also known as the positive index form. Other representations disclosed are negative index form (combinations of the variables where the rule is violated) and array form (all combinations of the variables plus for each combination an indication of whether the rule is violated or not).

For each term in the rule base the binary values assigned to the variables are compared with assignments to variables in the input signal thereby providing an output signal. The input and output signal may represent two

# EP 1 019 811 B1

possible states e.g. 'True' and 'False', 'Tautology' (undefined state), and 'Contradiction' (in-allowable state) .

Terms involving variables that is in a possible state in the input signal are identified. If all of these terms have the same value for a particular variable, the variable is determined to have that value in the output signal. Thereby it is possible to deduce or retrieve information from the rule base.

Thereby, there is provided a method and an apparatus which makes it possible deduce information about assignments of variables contained in the rule without having to carry out time consuming search in search trees for the boolean rule. By using a search tree for deducing information the computational effort for searching the tree is exponential to the number of allowable combinations of variables in the boolean rule whereas the computational effort for scanning the terms in e.g. a positive index form for the same rule is linear to the number of allowable combinations of variables in the same boolean rule. Thus, considerable reduction of the computational effort is obtained, especially when the rule contains a large number of variables.

However, the method disclosed in EP 0 456 675 consumes memory for storing the rule base which is exponential to the number of variables in the rule base. Generally, the method requires storage of N/2* (2^N) terms, where N is the number of variables in the formula. This means that a rule like:

$$A \Rightarrow B \text{ or } C \text{ or } D \text{ or } E \text{ or } F \text{ or } G \text{ or } H \text{ or } I \text{ or } J \text{ or } K \text{ or } L,$$

$$\text{or } M \text{ or } N \text{ or } O \text{ or } P$$

results in 32768 terms taking up 64kbyte 16-bits words in memory. Especially, when a large number of variables are included in the rule base this method may result in an unacceptable large computationally effort regarding examining all the terms each time the rule base is consulted. Further, the memory consumption is unacceptable.

Within the field of 'Constraint Logic Programming' also known as 'Boolean Unification' a number of methods have been proposed for converting a number of boolean rules into a number of terms (also denoted the 'Most General Unifier' or MGU) indicating whether specific combinations of boolean variables in the boolean rules are valid according to the boolean rules or not. Such methods are e.g. described in 'Boolean Unification, an efficient algorithm' by Antoine Rauzy, 1989, LaBri, Universite de Bordeaux and in 'Constraint Logic Programming', edited by Frederic Benhamod and Alain Colmerauer, Cambridge, MIT, pages 237-251 'Using Enumerative Methods for Boolean Unificatio', Antoine Rauzy.

These methods are all involved with combining the boolean rules into a common representation which can be stored in the memory of a computer and wherein a request in the form of a combination of all the variables in the common representation can be verified. The methods are especially developed for the use in Constraint Logic Programming languages such as the PROLOG language. In Constraint Logic Programming languages boolean rules or terms are generated successively and the object is therefore to add a representation of a new rule to an existing representation without having to generate a completely new representation each time a new rule is generated.

However, these methods also have the problem of exponential memory consumption which is traded off for the ability to continuously being able to add new rules. Thereby it is impossible to obtain fast scanning times of the rules i.e. a fast verification of a request against the rule. Further, these methods are not concerned with verification of requests in the form of a combination of just some of the variables in the common representation. Thus it is not sufficient to provide only partial knowledge of all the variables.

Thus, the prior art poses the problem that representations of Boolean rules which can be stored in the form of terms of variables, requires an unacceptable large memory consumption.

Summary of the Invention

It is therefore an object of the invention to reduce the amount of memory required to store the terms representing a Boolean rule.

This is achieved when the method mentioned in the opening paragraph is characterised in that the elements in said rule base are capable of representing a further state, indicating that a variable can take the state true as well as false.

Consequently, it is possible to execute a request to a rule base very fast and, further, provide the result of the request to the rule base as an output signal very fast, while it is possible to store the rule base in a very efficient representation in a computer.

For the formula introduced above, it is possible to compress the representation of the rule such that it takes up only 32 16~bits words in memory and such that is can be scanned about 2000 times faster in run time on a computer.

Further, there is provided a computer system, having a memory, for processing a request to a boolean rule having variables.

Cross References

Reference is made to the following patent applications:

(1) A Method and a Computer System for Configuring a Set of Objects, PCT publication number WO 99/13413;

(2) A Method and a Computer System for Configuring a Set of Objects, PCT publication number WO 99/13410;

(3) A Method and a Computer System For Interactive Configuration, PCT publication number WO 99/13412;

(4) A Method of Enabling Invalid Choices in Interactive Configuration Systems, PCT publication number WO 99/13411.

Brief Description of the Drawings

The invention Will be explained more fully below in connection with a preferred embodiment and with reference to the drawing, in which:

fig. 1 shows a flow chart for a method of generating a compressed rule representation;

fig. 2 shows a parse tree for the formula: (X or Y) $\Rightarrow$ Z;

fig. 3 shows four state vectors and indicates scanning of compressed and uncompressed terms according to the invention;

fig. 4 is the overall structure of a preferred embodiment of the present invention;

fig. 5 shows a flow chart for a method of generating a local input state vector from a global input state vector;

fig. 6 shows a flow chart for a method of scanning uncompressed terms;

fig. 7 shows a flow chart for a method of scanning compressed terms;

fig. 8 shows a flow chart for a method of extracting information.

Detailed Description of a Preferred Embodiment

In European Patent EP 0 456 675, a boolean formula is represented by the positive index form of that formula. This is illustrated by means of the following formula and table 1.

Example 1: For the formula

$$A \text{ or } !B \Rightarrow !C$$

which reads 'if A or not B, then not C', with the boolean variables A, B, and C, the positive index form is given in table 1.

Table 1.

| Term No. | A | B | C |
|:---:|:---:|:---:|:---:|
| 1 | 0 | 0 | 0 |
| 2 | 0 | 1 | 0 |
| 3 | 0 | 1 | 1 |
| 4 | 1 | 0 | 0 |
| 5 | 1 | 1 | 1 |

The five terms in table 1 represent exactly all the combinations of the variables where the formula is valid (not violated). In a computer the contents of table 1 could conveniently be represented by means of one bit per variable per term in the memory.

According to a first aspect of the invention this boolean rule representation can be changed from the use of the two states true and false to the three states true, false, and don't care. The don't care state represents tautology which implies that a don't care state may take the value true as well as false without violating the represented rule. The don't care state is indicated by a star (*) in the representation of the positive index form of a formula.

The formula

$$A \text{ or } !B \Rightarrow !C$$

may thereby be represented as given in table 2.

Table 2.

| Term No. | A | B | C |
|----------|---|---|---|
| 1, 4 | * | 0 | 0 |
| 2 | 0 | 1 | 0 |
| 3, 5 | * | 1 | 1 |

Compared with table 1, table 2 comprises two rows less than table 1. It is clear from table 2 that the first row can be expanded to the terms 1 and 4 in table 1 and that the last row can be expanded to the terms 3 and 5 in table 1. A compressed rule representation is hereby introduced.

According to a second aspect of the invention the compressed positive index form can be used to obtain faster execution speed and to consume less memory on a computer. One term that includes a don't care (*) can be represented with a two bit representation for each variable. The three symbols {0,1,*} used for the compressed representation are shown in table 3 along with the binary assignment of the bits S1 and S2 in the two bit representation.

Table 3.

| | True (1) | False (0) | Don't care (*) |
|----|----------|-----------|----------------|
| S1 | 0 | 1 | 1 |
| S2 | 1 | 0 | 1 |

The object of selecting the specific bit combinations is to make it possible to implement the rule scanning algorithm by means of simple logic and/or operations. The bit combinations may be chosen such that those operations which are assumed to be executed most frequently are the fastest operations to execute.

The compressed positive index form in table 2 may conveniently be represented by 5 bytes in the memory i. e. two bytes per compressed term and one byte per uncompressed term. For rules with a larger number of variables significant memory savings can be achieved.

Example 2: For the rule:

$$A \text{ or } B \text{ or } C \text{ or } D \text{ or } E \text{ or } F \text{ or } G \text{ or } H \text{ or } I \text{ or } J \Rightarrow K$$

The positive index form is given in table 4:

Table 4.

| Term No. | A | B | C | D | E | F | G | H | I | J | K |
|----------|---|---|---|---|---|---|---|---|---|---|---|
| 1 | 0 | 0 | 0 | 0 | 0 | 0 | 0 | 0 | 0 | 0 | 0 |
| 2 | 0 | 0 | 0 | 0 | 0 | 0 | 0 | 0 | 0 | 0 | 1 |
| 2 | 0 | 0 | 0 | 0 | 0 | 0 | 0 | 0 | 0 | 1 | 1 |
| 4 | 0 | 0 | 0 | 0 | 0 | 0 | 0 | 0 | 1 | 0 | 1 |
| ... | ... | | | | | | | | | | |
| 1025 | 1 | 1 | 1 | 1 | 1 | 1 | 1 | 1 | 1 | 1 | 1 |

The uncompressed terms in table 4 requires two bytes times 1025 terms, equal to 2050 bytes. The compressed term representation is given in table 5.

Table 5.

| Term No. | A | B | C | D | E | F | G | H | I | J | K |
|----------|---|---|---|---|---|---|---|---|---|---|---|
| 2-1025 | * | * | * | * | * | * | * | * | * | * | 1 |
| 1 ,2 | 0 | 0 | 0 | 0 | 0 | 0 | 0 | 0 | 0 | 0 | * |

This compressed representation requires two bytes times two bytes per term times two terms, equal to eight bytes.

For this rule, a significant saving is obtained in memory consumption, even though the compressed term representation uses twice as much memory per term, i.e. two bits per variable.

The generation of compressed terms is well known from the field of digital design. Karnaugh cards are one method and a method such as the Quine-McCluskey method (1965) can be found in Morris Mano's book Digital Design. An overlapping set of terms is generated by the Quine-McCluskey method.

However, we use a method by Antoine Rauzy "Boolean Unification, an efficient algorithm" 1989, LaBri, Universite de Bordeaux. This method generates a non overlapping set of terms. Boolean unification is also described in "Constraint Logic Programming", edited by Frederic Benhamod and Alain Colmerauer, Cambridge, MIT, pages 237-251 "Using Enumerative Methods for Boolean Unificatio" ", Antoine Rauzy. It should be noted that boolean unification is concerned with the field of generating a single representation of boolean rules that can be examined in linear time opposite to e.g. search trees that is searched, more or less intelligent, with an exponential time consumption. The term 'Constraint Logic Programming' is also known as 'Boolean Unification'.

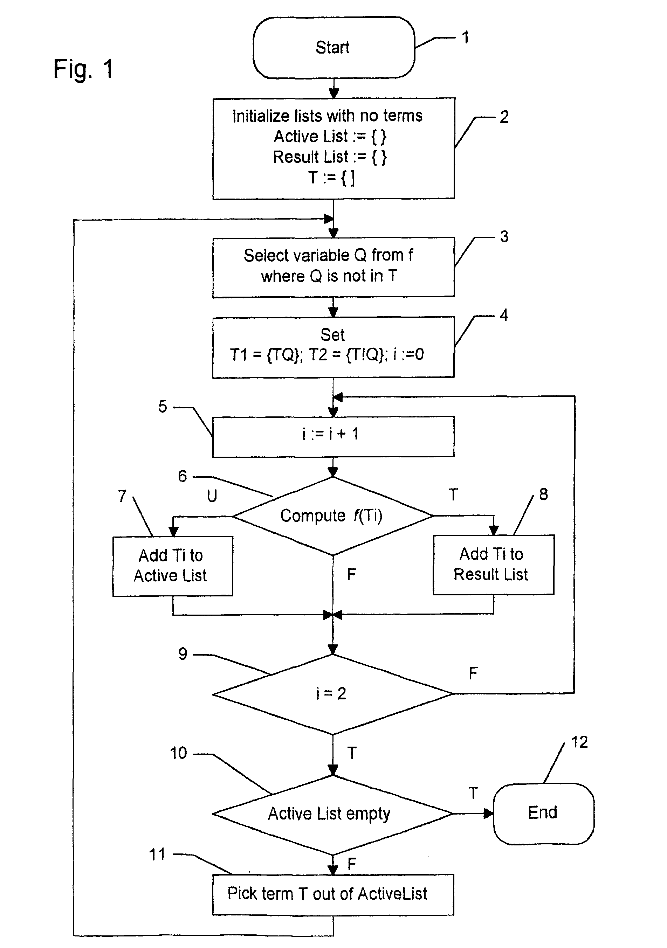

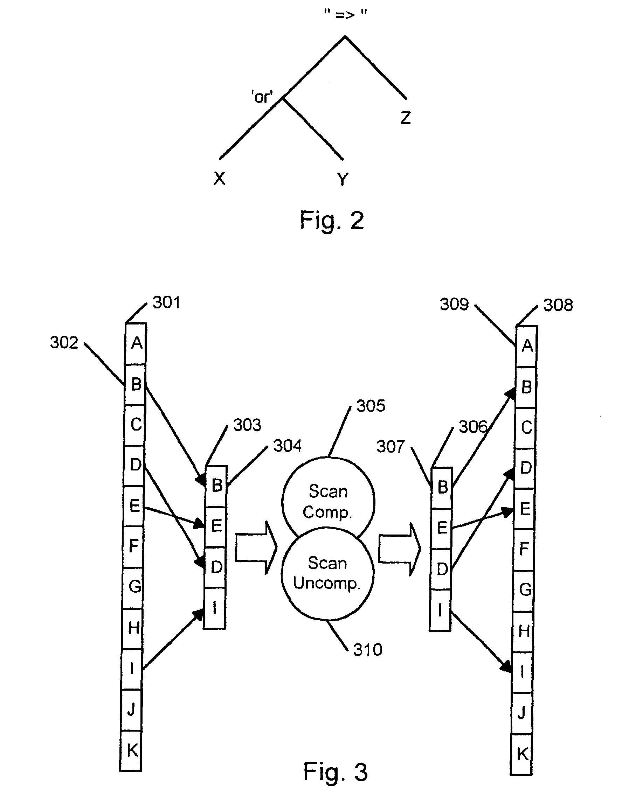

Fig. 1 shows a flow chart for a method of generating a compressed rule representation. In step 1, the method begins with a symbolic boolean formula which is subject for a compressed representation. In step 2 an initialization process comprises assigning of the variables ActiveList and ResultList to the empty set and T to the empty set. When the initialization is done, a variable Q in the formula $f$, which is not in the term T at present, is selected in step 3. If several variables are possible, then the topmost one in the associated parse tree (see fig. 2) is selected, i.e. the variable governed by the fewest operators is selected. In case of ties, a variable is chosen at random. In step 4 the two terms T1 and T2 are generated, where T1 is T with Q added and T2 is T with the negated Q added. Each term respectively represents one side of the parse tree. Furthermore a counter i is initialized. Then a loop is entered, and the first step 5 of the loop is to increment the counter, i.e. i is set equal to i + 1. The next step 6 in the loop is to compute the truth value of the function $f$ with respect to the known variable values in T1 or T2 that is the value of $f$(Ti). The truth value is calculated by means of a calculator which uses the rewrite rules given in table 6. The symbol A may represent both a variable and a sub-formula.

Table 6.

| Rule No. | Rules |
|----------|-------|
| R1 | false and A :$\Rightarrow$ false |
| R2 | false or A :$\Rightarrow$ A |
| R3 | false $\Rightarrow$ A :$\Rightarrow$ true |
| R4 | A $\Rightarrow$ false :$\Rightarrow$ not A |
| R5 | false $\Leftrightarrow$ A :$\Rightarrow$ not A |
| R6 | not false :$\Rightarrow$ true |
| R7 | false xor A :$\Rightarrow$ A |
| R8 | true and A :$\Rightarrow$ A |
| R9 | true or A :$\Rightarrow$ true |
| R10 | true $\Rightarrow$ A :$\Rightarrow$ A |
| R11 | A $\Rightarrow$ true :$\Rightarrow$ true |
| R12 | true $\Leftrightarrow$ A :$\Rightarrow$ A |
| R13 | not true :$\Rightarrow$ false |
| R14 | true xor A :$\Rightarrow$ not A |

The rewrite rules are derived directly from the Boolean algebra. If all variables are known then it is easy to determine the truth value of the formula f, however with only partial assignment the truth value may be undetermined in some cases.

It is only necessary to compress a rule once, since the rule representation may be stored.

Fig. 2 shows a parse tree for the formula: (X or Y) $\Rightarrow$ Z. The top node of the tree corresponds to the '=>' or implication in the formula. The other node corresponds to the or-operator. X, Y, and Z are the variables of the parse tree.

Example 3: For the formula

$$(X \text{ or } Y) \Rightarrow Z$$

where Z is equal to True (Z := true), the formula is

$$(X \text{ or } Y) \Rightarrow \text{True}$$

according to R11 the formula is "True", i.e. the truth value is True irrespective of the assignment of X and Y. For another term T = !XY, the formula is

$$(\text{False or True}) \Rightarrow Z$$

according to R9 "True $\Rightarrow$ Z" and according to R10 "Z", and therefore the truth value cannot be determined in this case. In the event that the truth value of the formula cannot be determined, the result of the computation in step 6 is 'unkonwn', and then Ti is added to the ActiveList in step 7 for further processing in loop comprising the steps 3 to 11. In the event that the truth value of the formula is evaluated to be 'True' in step 6, then the term T is added to the ResultList as a valid compressed term in step 8. In the event that the truth value of the formula is evaluated to be 'False' in step 6, or Ti is added to either the ResultList in step 8 or the ActiveList in step 7, then it is tested in step 9 whether the counter i is equal to 2. If both T1 and T2 have been computed, it is tested in step 10 whether the ActiveList is empty, otherwise, if T1 and T2 have not been computed, the loop is resumed at step 5, where the counter i is incremented. In step 10 it is tested whether the ActiveList is empty. If it is empty, then the processing is terminated, otherwise a term T is subjected to further processing by taking T out of the ActiveList and resuming the loop in step 3.

If the ActiveList is empty at step 10, the result list contains a set of terms representing the positive index of the formula in compressed form. The terms are translated into the index form by means of table 7.

Table 7.

| Term Variable | Compressed Positive Index |
|---|---|
| A | 1 |
| !A | 0 |
| 'Not occurring in term but in formula' | * |

Generally, this compressed formula representation takes up memory in the order of N times O bits, where N is the number of variables and O is the number of operators.

Examples of compression:

Example 4: In this example, the formula

$$(X \text{ or } Y) \Rightarrow Z$$

is subjected to a compressed term representation. The succesive updates of the ResultList and ActiveList are shown in table 8 below.

Table 8.

| Active List (AL) | Result List (RL) |
|---|---|
| [] | [] |

Table 8.   (continued)

| Active List (AL) | Result List (RL) |
|---|---|
| [{Z}, {!Z}] | [] |
| [{!Z}] | [{Z}] |
| [{Y,!Z},{!Y,!Z}]] | [{Z}] |
| [{!Y, !Z}]] | [{Z}] |
| [{X, !Y, !Z},{!X, !Y, !Z}] | [{Z}] |
| [{!X,!Y,!Z}] | [{Z}] |
| [] | [{!X, !Y, !Z},{Z}] |

Therefore, the compressed positive index form is given as shown in table 9.

Table 9.

| Term No. | X | Y | Z |
|---|---|---|---|
| 1 | 0 | 0 | 0 |
| 2 | * | * | 1 |

Example 5: In this example, the formula

$$X \Rightarrow (Y \text{ or } Z)$$

is subjected to a compressed term representation. The succesive updates of the ResultList and ActiveList are shown in table 10 below.

Table 10.

| Active List (AL) | Result List (RL) |
|---|---|
| [] | [] |
| [{X},{!X}] | [] |
| [{X,Y}, [{X, !Y}] | [{!X}] |
| [{X, !Y}] | [{ !X},[{X,Y}] |
| [{X,!Y,Z},{X, !Y, !Z}] | [{!X},{X,Y}] |
| [] | [{!X},{X,Y},{X,!Y, Z}] |

Therefore, the compressed positive index form is given in table 11.

Table 11.

| Term No. | X | Y | Z |
|---|---|---|---|
| 1 | 0 | * | * |
| 2 | 1 | 1 | * |
| 3 | 1 | 0 | 1 |

To optimize the use of memory, the terms that do not have any don't cares (*) will be kept in a list separate from those that have don't cares (*).
A Boolean formula is henceforth represented as a structure with three elements

$$\text{Formula} = (VL, PIL, CPIL)$$

where VL is Variable List, PIL is an uncompressed Positive Index List, and CPIL is a Compressed Positive Index List, containing a list of pairs {S1, S2}.
Example 5 (continued): Remembering the Boolean rule:

$$X \Rightarrow ( Y \text{ or } Z ),$$

the contents of the ResultList in table 10 and the translations given in table 3 and 7, give the data representation of the formula

$$\text{Formula} =( [X,Y,Z], [101], [\{001,111\}, \{111,011\} ] )$$

Example 2 (continued): Remembering the Boolean rule:

$$A \text{ or } B \text{ or } C \text{ or } D \text{ or } E \text{ or } F \text{ or } G \text{ or } H \text{ or } I \text{ or } J \Rightarrow K,$$

the term representation in table 5 gives the data representation of the formula:

$$\text{Formula} =( [A,B,C,D,E,F,G,H,I,J,K],$$

$$[000000 \ 00000],$$

$$[\{11111111110,11111111111\}])$$

Thus it is clear that this representation is very efficient.

Fig. 3 shows four state vectors and indicates scanning of compressed and uncompressed terms according to the invention. The overall structure of the scanning algorithm is divided into four stages. At stage one a request to a rule is prepared. The request is in the form of a state vector, and the rule is in the form of a formula represented by the compressed and uncompressed terms. That is, a local input state vector (ISV) 303 with elements 304 is generated by extracting information from the global state vector 301 with elements 302. The information is extracted such that only the variables involved in the formula are extracted. This minimizes the computational effort required in the processing of the request to the rule. The processing comprises two stages: scanning of compressed and uncompressed terms.

At stage two 305 the local input state vector is scanned through all uncompressed terms of the formula to test for 'match' or no 'match', and the relevant elements 307 of the local output state vector (OSV) 306 are updated with the result of the uncompressed scanning.

At stage three 310 the local input state vector (ISL) 303 is scanned through all the compressed terms of the formula to test for 'match' or 'no match'. The information retrieved by the scanning is contained in the local output state vector (OSV). At stage four the contents of the local output state vector are transferred to the global output state vector 308 with elements 309.

A request in the form of an input state vector comprises information about known aspects of an element, for example the state of sensors or configuration selections, but generally other elements of the state vector will be unknown. The information may be contained in elements of a state vector having variable values. The request processing at stage two and four scans a Boolean formula with the knowledge of the current assignments of variables found in the state vector. One object of the invention is to determine some or all of the unknown elements where the rule enables this. The result of the request is updated in the output state vector.

If a contradiction between the request and the rule is detected, i.e. the formula is violated, then the algorithm ends, and if the formula is valid, it is determined whether any further variables may be deduced, i.e. assigned a value in the state vector. The state vector can physically be any data repository such as a data base or a set of objects with associated values about a set of Boolean items occurring in the formula.

The input state vector and the output state vector comprise the variable values which occur in the formula. Each variable in the state vector is stored in the form of one of four possible two-bit combinations.

Table 12.

|  | True (1) | False (0) | Tautology (*) | Contradicion (!) |
|---|---|---|---|---|
| S1 | 0 | 1 | 1 | 0 |
| S2 | 1 | 0 | 1 | 0 |

Table 12 shows the possible variable values of the two bits S1 and S2 in the state vector.

It should be noted that this is the same convention as used for representing the compressed terms for the states 'True', 'False', and 'Tautology' (don't care). However, according to the invention the bit-representations of the states can be swapped, e.g. 'True' can be represented by the bit-values S1=1; S2=1, 'False' can be represented by the bit-values S1=0; S2=0, 'Tautology' ('Don't Care') can be represented by the bit-values S1=1; S2=0, and 'Contradiction' can be represented by the bit-values S1=0; S2=1. In a preferred embodiment the bit-representations of the states in the request state vector, the rule base and the response state vector are the same, however other combinations can implemented according to the invention. In order to gain the benefits according to the invention proper modifications of the disclosed algorithms must be made. However, this is within the skills of a person skilled in the art.

The scanning process can be seen as looking at the terms of the formula one by one. If there is a match between the variables bound in the input state vector and the terms (i.e. the rule representation), then the unbound variables may have the value represented in the term. Bounded variables may take the symbolic values 'True' or 'False', whereas unbounded variables may take the symbolic value 'Tautology' or 'Don't Care'.

The following table determines whether a match exists or not between a rule term and an input state vector variable. A match between a term and the input state vector is detected if all the variables of that term match with the input state vector.

Table 13

| | | |
|---|---|---|
| 0 | 0 | Match |
| 0 | 1 | No Match |
| 0 | * | Match |
| 1 | 1 | Match |
| 1 | * | Match |
| * | * | Match |

Table 13 shows which combinations of '0' ('False'), '1' ('True'), and '*' ('Don't Care'/'Tautology') result in a 'Match' or 'No Match'.

When looking at the actual chosen bit representation, both bits have to differ in order to detect a 'no match'. If other bit-representations of the states are used, other logical relations of the bits can be found.

When a match has been detected, the knowledge about the matching term is stored in an output state vector using the following update table.

Table 14.

| Term Variable | Output State Vector Variable | New Output State Vector Variable |
|---|---|---|
| 0 | ! | 0 |
| 1 | ! | 1 |
| * | ! | * |
| 1 | 0 | * |
| 0 | 1 | * |
| * | 0 | * |
| * | 1 | * |
| 0 | 0 | 0 |
| 1 | 1 | 1 |
| * | * | * |

Table 14 shows the update of the output state vector responsive to the term variable and the previous output state vector.

When looking at the chosen bit representation given in table 12 and the output update in table 14, it is now possible to update the output state vector by a simple boolean OR operation.

Example 5 (continued I): Remember the rule

$$X \Rightarrow ( Y \text{ or } Z ),$$

now with a request where external assignments have been made in the state vector. The assignment is that Z is set to false, X is set to true, and there is no knowledge about Y, i.e. tautology. The input state vector is

$$[X \ Y \ Z] = [1 * 0]$$

and the term representation is as given in table 11.

|  | X | Y | Z |
|---|---|---|---|
| Input State Vector = | [1 | * | 0] |

|  | X | Y | Z |  | Output State Vector = | | | Step No |
|---|---|---|---|---|---|---|---|---|
| term 1 → | 0 | * | * | → No match | [! | ! | !] | 1 |
| term 2 → | 1 | 1 | * | → Match | [1 | 1 | *] | 2 |
| term 3 → | 1 | 0 | 1 | → No Match | [1 | 1 | *] | 3 |

Table 15

Table 15 shows the input state vector, the representation of terms 1, 2, and 3 and the three succesive updates of the output state vector. The output state vector is by default initialized to 'contradiction' (!) for all elements in the output state vector. Thus, because no match is found between the input state vector and term 1, the output state vector is not updated in step 1. In step 2 a match is detected, and therefore the output state vector is updated according to table 14. In step 3 there no match is found either, and the output state vector remains unchanged. 'Match'/'No Match' is detected by means of table 13.

Now when looking at the output state vector and eliminating those elements that were bound in the input state vector, it can be seen that Y must be true according to the rule terms. This implies that Y may take the value True and may now be transferred to the output state vector with that value.

The bitwise determination of whether there is a match or not and the updating of the output variables can be done by the four operations "and, or, not, xor", if the representations given in table 3 and 12 is used. Generally, a computer executes these basic operations very fast. If the signal components S1 and S2 are represented by means of e.g. two words, then a 32-bit computer can execute a term match process in two basic operations for formulas with less than 32 variables. In configuration systems rules with less than 32 variables are the most common rules.

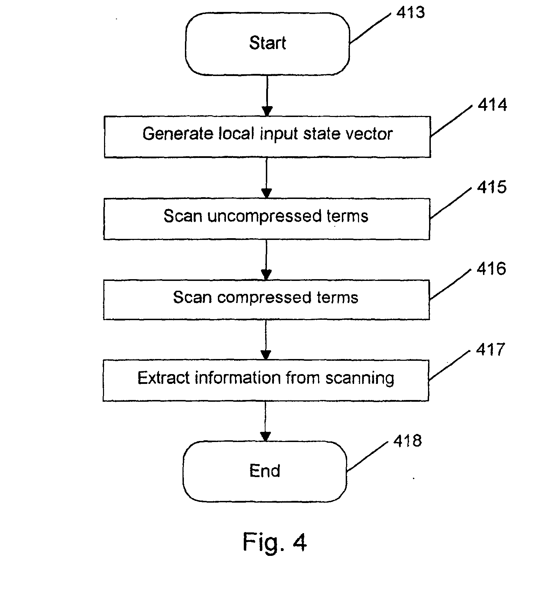

Fig. 4 is the overall structure of a preferred embodiment of the present invention. The structure is divided into four stages i.e. 414, 415, 416, and 417. The detailed method used in a preferred embodiment is presented in each of these four stages. Start 413 and end 418 indicates where the method is initiated and where no further processing takes place. Stage one 414 corresponds to the global to local input state vector conversion in fig. 3, and stage four corresponds to the local to global output state vector conversion.

Description of variables in scanning algorithm:

StateVector:    Is a vector where all the variables are represented by their current value. The value of StateVector[A] is the current truth value of A (True, False, Unbound).

TV              Is a bit mask indicating the True variables in input state vector with a binary '1'.

BV          Is a bit mask indicating the bounded variables in input state vector with a binary '1'.
ISV         Is the local input state vector.
OSV         Is the local output state vector.
CH          Is a bit mask indicating the changed variables in input state vector with a binary '1' .

$|X|$ means the length of X, e.g. $|X| = |\{a,b,s,d\}| = 4$.

Formula = (VL, PIL, CPIL), where
VL is a variable list.
PIL is a positive index list.
CPIL = [{S1, S2}] is a compressed positive index list of pairs {S1, S2}.

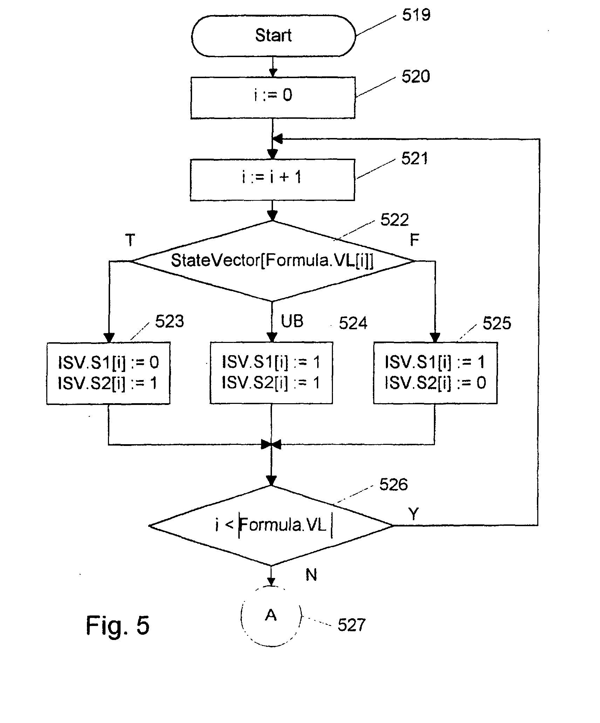

Fig. 5 shows a flow chart of a method of generating a local input state vector from a global input state vector. Start 519 is similar to start 413 of fig. 4. First, a counter i is initialized to zero in step 520 in order to count over the variables in the formula. Then a loop is entered, and the first step 521 in the loop is to increment the counter i to i + 1. The counter is used as an index in the formula variable list VL to get the variable which is again used as an index in the StateVector to extract the actual value of the variable either True, False or Unbound. In step 522 the variable value of the element number i in Formula.VL is recognized as either true (T), false (F), or unbound (UB). If the result of step 522 is true, then step 523 is entered, if the result is unbound, then step 524 in entered, and if the result is false, then step 525 is entered. In step 523 the bits S1 and S2 of variable number i are updated with S1 := 0 and S2 := 1. In step 524 the bits S1 and S2 of variable number i are updated with S1 := 1 and S2 := 1. In step 525 the bits S1 and S2 of variable number i are updated with S1 := 1 and S2 := 0. The loop is repeated until the truth value of all the variables in the formula has be transferred to the local input state vector (ISV). This is tested in step 526. If the counter i has reached the length of the formula variable list Formula.VL, then the loop is terminated, otherwise the loop is resumed with a counter increment in step 521. If the loop is terminated, the method continues with the scanning of uncompressed terms via the step A, 527.

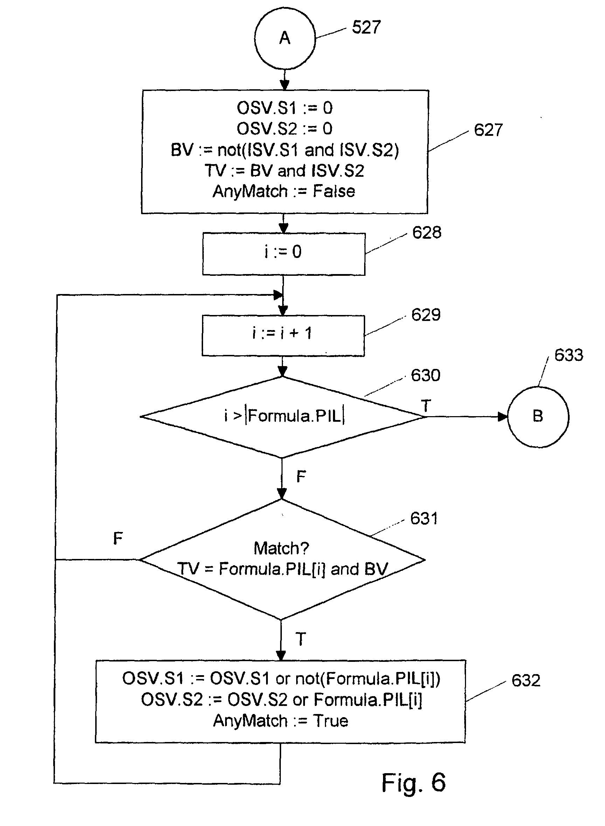

Fig. 6 shows a flow chart of a method of scanning uncompressed terms. The method of fig. 5 continues via step A, 527. In step 627 initialization of variables regarding the scanning of uncompressed terms is performed. The local output state vector OSV is initialized to 'contradiction' by setting the two bits S1 and S2 to '0'. That is OSV[i].S1 := 0, OSV[i].S2 := 0, corresponding to that all elements are set to 0. The bounded variables in the local input state vector ISV are indicated with a bit mask BV by a binary '1', that is BV:=not(ISV.S1 and ISV.S2). The true variables of the local input state vector are also indicated by a bit mask TV:=BV and ISV.S2. And finally the variable AnyMatch is set to false, Any-match:=False. In step 628 the counter i is set to zero, i:=0. This counter is used to count over the uncompressed terms in the positive index list, PIL, of the formula. Step 629 increments the counter i and is the first step of a loop. The loop is terminated in step 630 if all the PIL terms have been scanned, here tested whether the counter i has reached the length of the formulas PIL list, that is, is i = |Formula.PIL|. Detection of whether there is a match or not is carried out in step 631, wherein the truth value of the statement

$$TV = Formula.PIL[i] \text{ and } BV$$

is tested. If this statement is false, then the loop is resumed with a counter increment in step 629, otherwise the local output state vector is updated along with the variable AnyMatch, before the loop is resumed in step 629. The update is as follows:

OSV.S1 :=     OSV.S1 or not(Formula.PIL[i])
OSV.S2 :=     OSV.S2 or Formula.PIL[i] AnyMatch := True

If no match exists, then the OSV is not updated and a contradiction is detected. When the loop is finished, as detected in step 630, the method continues with scanning of the compressed terms via the step B, 633.

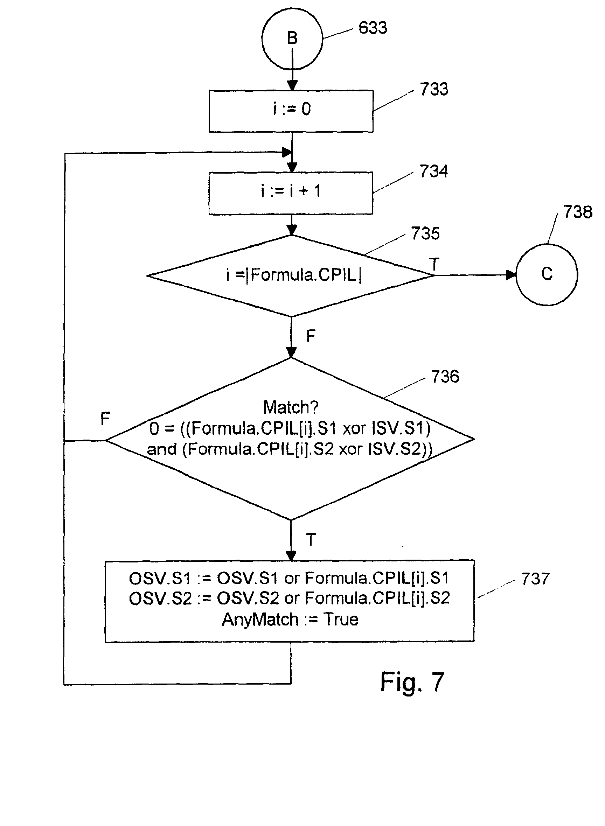

Fig. 7 shows a flow chart of a method of scanning compressed terms. The method of fig. 6 continues via the step B, 633. In step 733 the counter i is set to zero, i:=0. The counter is used to count over the compressed terms in the compressed positive index list, CPIL, of the formula. Step 734 increments the counter i and is the first step of a loop. The loop is terminated in step 735 if all the CPIL terms have been scanned, here tested whether the counter i has reached the length of the formulas CPIL list, that is, is i = |Formula.CPIL|. Detection of whether there is a match or not is carried out in step 736, wherein the truth value of the statement

$$0 = ((Formula.CPIL[i].S1 \text{ xor } ISV.S1) \text{ and}$$

$$(Formula.CPIL[i].S2 \text{ xor } ISV.S2))$$

is tested. If this statement is false, then the loop is resumed with a counter increment in step 734, otherwise the local output state vector is updated along with the variable AnyMatch, before the loop is resumed in step 629. The update is as follows:

OSV.S1 :=    OSV.S1 or Formula.CPIL[i].S1
OSV.S2 :=    OSV.S2 or Formula.CPIL[i].S2 AnyMatch := True

If no match exists, then the OSV is not updated and a contradiction is detected. When the loop is finished, as detected in step 735, the method continues with an information extraction via step C, 738.

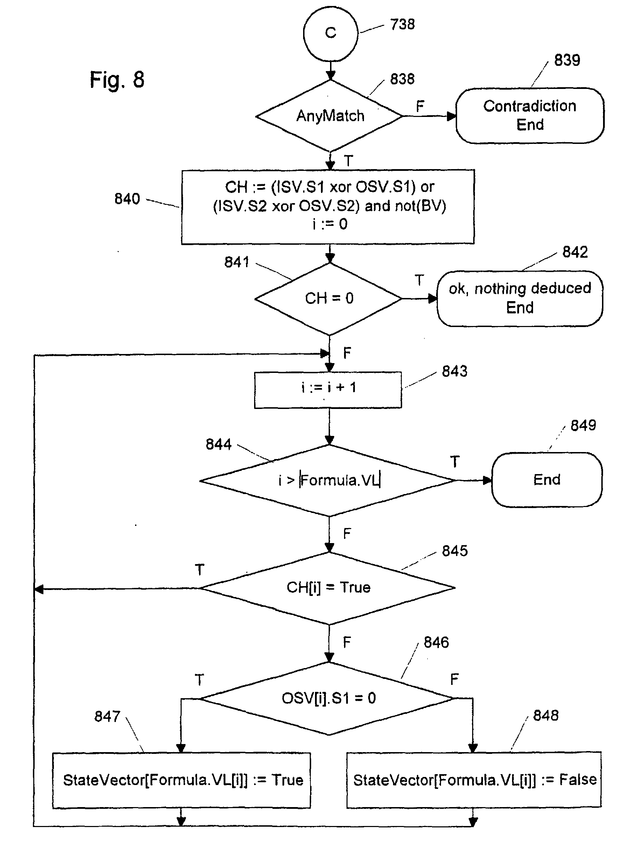

Fig. 8 shows a flow chart of a method of extracting information. The method of fig. 7 continues via the step C, 738. If no match is detected in step 838, for either the compressed or uncompressed terms, then the request in the form of the input state vector is in contradiction with the rule representation and thereby the rule. This result is provided in step 839 if the variable AnyMatch is false. Alternatively the detection is performed by calculating the truth value of the statement: 0 = (OSV.S1 or OSV.S2)

The variable that has been changed due to the scanning process es extracted by comparing the local input state vector (ISV) to the output state vector (OSV) and removing all bound variables indicated by BV in the change vector CV. That is, a true variable could match a unbound variable. The changed variables are indicated in step 840 in the vector CH by means of the statement:

$$CH:=(ISV.S1 \text{ xor } OSV.S1) \text{ or } (ISV.S2 \text{ xor } OSV.S2) \text{ and}$$

$$not(BV)$$

If the change vector only contains zeros, then the scanning has reveiled no new information, and the algorithm may then report this. That is, the request is valid according to the rule. In step 841 it is tested whether CH is equal to 0, and if CH is equal to 0, then in step 842 it is concluded that nothing is deduced and the method terminates. The method ends, and it has deduced variables which are reported. In step 841 the counter i is incremented in the beginning of the loop. This loop is repeated until the truth value af all the deduced variables in the local output state vector (OSV) have been transferred to the StateVector SV, here tested in step 844 whether the counter i has reached the length of the formula variable list VL. That is, is i<|Formula.VL|?. If the result is no, then the method terminates in step 849, otherwise the method continues in step 845. In step 845 it is tested whether the value of element i in the vector CH is true. If the value of the element is true, then it is tested, in step 846, whether bit S1 in the element i of the local output state vector is true, that is is OSV[i].S1=0 ?. If it is true, then the StateVector[Formula.VL[i]] is set to true in step 847, otherwise StateVector[Formula.VL[i]] is set to false. When step 847 or step 848 is executed, then the loop resumes with a counter increment in step 843. Likewise, the loop resumes if the result of step 845 is false.

Example 5 (continued II): Remember the rule

$$X \Rightarrow ( Y \text{ or } Z )$$

where the formula representation is

$$\{ [X,Y,Z], [101], [\{111,011\},\{001,111\} ] ] \}.$$

Furthermore, it is known that X is assigned to true and Z is assigned to false.
Start at stage one: Generate local input state vector
(X) StateVector[1] = True
(Y) StateVector [2] = Unbound
(Z) StateVector[3] = False
isv={011, 110}, osv = {000,000}, TV = [100], BV = [101]
Stage two: Scan uncompressed terms

Match ? (Formula.PIL[i] and BV) xor TV
PIL[1]: (101 and 101) xor 100 = 101 xor 101 = 001 (No match)
isv={011, 110}, osv = {000,000}, TV = [100], BV = [101]

Stage three: Scan compressed terms
Match ? ( (Formula.CPIL[1].s1 xor isv.s1) and
  (Formula.CPIL[1].s2 xor isv.s2))
[{111, 011} , {001, 111}
CPIL[1]: (111 xor 011 ) and ( 011 xor 110) = 100 and 101 = 100 (No Match) Continue
CPIL[2]: (001 xor 011) and (111 xor 110) = 010 and 001 = 000 (Match)
osv.s1 := osv.s1 or Formula.CPIL[2].s1 = 000 or 001 = 001
osv.s2 := osv.s2 or Formula.CPIL[2].s2 = 000 or 111 = 111
isv={011, 110}, osv = {001,111}, TV = [100], BV = [101]

Stage four: Extract information from scanning
CH = ((isv.s1 xor osv.s1) or (isv.s2 xor osv.s2)) and !BV
  = ( 011 xor 001) or (110 xor 111 ) and !101
  = (010 or 001) and 010= 011 and 010 = 010
Local StateVector [2] = {0,1} = True
Therefore Y equals True, as expected.

Example 6: This example is taken from the field of configuration.

The relations between the selectable elements for a car, the rule, or constraint may be:

$$\text{Model[Turbo] or Model[Cabriolet]} \Rightarrow \text{MetalicPaints and Trim[Leather] and CruiseControl}$$

Instead of using the above terms we abbreviate these to more readable variable names:

Model[Turbo]    = A
Model[Cabriolet]    = B
MetalicPaints    = C
Trim[Leather]    = D
CruiseControl    = E

The above constraint abbreviates to the following formula:

$$\text{A or B} \Rightarrow \text{C and D and E}$$

We can now commence the Fast Boolean Scanning algorithm. Leftmost is the point at which the ActiveList and the ResultList are shown. p4_5 indicates the point between step 4 and step 5, likewise p9_10 indicates the point between step 9 and step 10. For each iteration it is shown what the terms T, T1 and T2 are assigned.

Referring to fig. 1 'generating a compressed rule representation':

| Point: | ActiveList: | ResultList: |
|---|---|---|
| p2_3 | { } | {} |
| T=Ø, T1=A, T2=!A | | |
| p4_5 | {} | {} |
| p4_5 | {A} | {} |
| p9_10 | {A, !A} | {} |
| T=A, T1=AB, T2=A!B | | |
| p4_5 | {!A} | {} |
| p4_5 | {!A, AB} | {} |
| p9_10 | {!A, AB, A!B} | {} |

(continued)

| Point: | ActiveList: | ResultList: |
|---|---|---|
| **T=!A, T1=!AB, T2=!A!B** | | |
| p4_5 | {AB, A!B} | {} |
| p4_5 | {AB, A!B,!AB} | {} |
| p9_10 | {AB, A!B,!AB} | {!A!B} |
| | | |
| **T=AB, T1=ABC, T2=AB!C** | | |
| p4_5 | {A!B,!AB} | {!A!B} |
| p4_5 | {A!B,!AB,ABC} | (!A!B) |
| p9_10 | {A!B,!AB,ABC} | {!A!B} |
| | | |
| **T=A!B, T1=A!BC, T2=A!B!C** | | |
| p4_5 | {!AB,ABC} | {!A!B} |
| p4_5 | {!AB,ABC,A!BC} | {!A!B} |
| p9_10 | {!AB,ABC,A!BC} | {!A!B} |
| | | |
| **T=!AB, T1=!ABC, T2=!AB!C** | | |
| p4_5 | {ABC,A!BC} | (!A!B) |
| p4_5 | {ABC,A!BC,!ABC} | {!A!B} |
| p9_10 | {ABC,A!BC,!ABC} | {!A!B} |
| | | |
| **T=ABC, T1=ABCD, T2=ABC!D** | | |
| p4_5 | {A!BC,!ABC} | {!A!B} |
| p4_5 | {A!BC,!ABC,ABCD} | {!A!B} |
| p9_10 | {A!BC,!ABC,ABCD} | {!A!B} |
| | | |
| **T=A!BC, T1=A!BCD, T2=A!BC!D** | | |
| p4_5 | {!ABC,ABCD} | {!A!B} |
| p4_5 | {!ABC,ABCD,A!BCD} | {!A!B} |
| p9_10 | {!ABC, ABCD, A!BCD} | {!A!B} |
| | | |
| **T=!ABC, T1=!ABCD, T2=!ABC!D** | | |
| p4_5 | {ABCD,A!BCD} | {!A!B} |
| p4_5 | {ABCD,A!BCD,!ABCD} | {!A!B} |
| p9_10 | {ABCD,A!BCD, !ABCD} | {!A!B} |
| | | |
| **T=ABCD, T1=ABCDE, T2=ABCD!E** | | |
| p4_5 | {A!BCD,!ABCD} | {!A!B} |
| p4_5 | {A!BCD,!ABCD} | {!A!B,ABCDE} |
| p9_10 | {A!BCD, !ABCD} | {!A!B,ABCDE} |
| | | |
| **T=A!BCD, T1=A!BCDE, T2=ABCD!E** | | |
| p4_5 | {!ABCD} | {!A!B,ABCDE} |
| p4_5 | {!ABCD} | {!A!B,ABCDE, A!BCDE} |
| p9_10 | {!ABCD} | {!A!B,ABCDE, A!BCDE} |
| | | |
| **T=ABCD, T1=ABCDE, T2=ABCD!E** | | |

(continued)

| Point: | ActiveList: | ResultList: |
|---|---|---|
| p4_5 | {} | {!A!B,ABCDE,A!BCDE} |
| p4_5 | {} | {!A!B,ABCDE,A!BCDE, iABCDE} |
| End | {} | {!A!B,ABCDE,A!BCDE, !ABCDE} |

The result can now be translated into the two-bit representation given in table 16:

Table 6.

| Term No. | A | B | C | D | E |
|---|---|---|---|---|---|
| 1 | 0 | 0 | * | * | * |
| 2 | 1 | 1 | 1 | 1 | 1 |
| 3 | 1 | 0 | 1 | 1 | 1 |
| 4 | 0 | 1 | 1 | 1 | 1 |

Resulting in the following representation

$$Formula = ([A,B,C,D,E], [11111,10111,01111],$$

$$[\{11111, 00111\}])$$

Referring to fig.5 'generating a local input state vector':

Now, in the formula A or B $\Rightarrow$ C and D and E a user may have chosen B=False and E=True corresponding to having made the choices of discarding the Cabriolet model, but selecting Cruise Control.

Initially, we have the following data structures from above:

Formula.VariableList = [A,B,C,D,E]
Formula.PositiveIndexList= [11111,10111,01111]
Formula.CompressedPositiveIndexList = [{11111,00111}]

At the point A (after the first loop) the InputStateVector has been assigned.
isv.s1 = 11110
isv.s2 = 10111

After A the OutputStateVector is, BoundVariable, True-Variable and AnyMatch are initiallized to
osv.s1 = 0
osv.s2 =0
BV = not (isv.s1 and isv.s2) = not (11110 and 10111) = not 10110 = 01001
TV = BV and isv.s2 = 01001 and 10111 = 00001
AnyMatch = False

Referring to fig. 6 'scanning of uncompressed terms':

The following shows 631 and 632 at each iteration of the loop 629 to 632.

i = 1:

631)    TV = Formula.PIL[i] and BV
        00001 = 11111 and 01001
        00001 = 01001
        False

i = 2

631)    TV = Formula.PIL[i] and BV

```
            00001 = 10111 and 01001
            00001 = 00001
            True
    632)    osv.s1 := osv.s1 or not Formula.PIL[i]
                   := 00000 or not 10111
                   := 01000
            osv.s2 := osv.s2 or Formula.PIL[i]
                   := 00000 or 10111
                   := 10111


    i = 3

    631)    TV = Formula.PIL[i] and BV
            00001 = 01111 and 01001
            00001 = 01001
            False
```

At B the output state vector is thus assigned:

```
    osv.s1 = 01000
    osv.s2 = 10111
```

Referring to fig. 7 'scanning compressed terms':

The loop from 734 to 737 is only executed once as the Compressed Possitive Index List only contains one element.

```
    736)    0 = (Formula.CPIL[i].s1 xor isv.s1) and
            (Formula.CPIL[i].s2 xor isv.s2)
            0 = (11111 xor 11110) and (00111 xor 10111)
            0 = 00001 and 10000
            0 = 00000
            True

    737)    osv.s1  := osv.s1 or Formula.CPIL[1].s1
                    := 01000 or 11111
                    := 11111
            osv.s2  := osv.s2 or Formula.CPIL[1]s2
                    := 10111 or 00111
                    = 10111
         AnyMatch := True
```

Now because AnyMatch was assigned True, the test at (38) is passed, and the algorithm proceeds to (40) where CH is initialized to:

Referring to fig. 8 'extracting information':

```
    CH    := ((isv.s1 xor osv.s1) or (isv.s2 xor osv.s2)) and not BV
    CH    := ((11110 xor 11111) or (10111 xor 10111) and not 01001
          := (00001 or 00000) and 10110
          := 00001 and 10110
          := 00000
```

After the loop from 844 to 848 no elements of the state vector are changed (deduced to either true or false). It is, however, verified that the state vector does not lead to any contradictions.

According to the invention there is provided a method which allows for fast processing of a request to rule, such that it is verified whether the request is valid according to the rule.

Moreover, there is provided a method which allows to compress the representation of a rule subject to a request for verifying whether the request is valid according to the rule.

Still moreover, there is provided a method which allows for deducing information from the rule base, such that unknown information in the request may be, but not necessarily is determined.

It should be noted that although the positive index form have been used as an example in the description other representations of the rule base are possible. Other representations can be the negative index form (combinations of the variables where the rule is violated) and array form (all combinations of the variables plus an indication of whether the rule is violated or not). Proper modifications of the disclosed algorithms must be made in order to gain the benefits according to the invention. However, this is within the skills of a person skilled in the art.

The invention may be embodied as a computer program or a part of a computer program, which may be loaded into the memory of a computer and executed therefrom. The computer program may be distributed by means of any data storage or data transmission medium. The storage media can be magnetic tape, optical disc, compact disc (CD or CD-ROM), mini-disc, hard disk, floppy disk, ferro-electric memory, electrically erasable programmable read only memory (EEPROM), flash memory, EPROM, read only memory (ROM), static random access memory (SRAM), dynamic random access memory (DRAM), ferromagnetic memory, optical storage, charge coupled devices, smart cards, etc. The transmission medium can be a network, e.g. a local area network (LAN), a wide area network (WAN), or any combination thereof, e.g. the Internet. The network may comprise wire and wire-less communication links. Via the network a software embodiment (i.e. a program) of the Invention, or a part thereof, may be distributed by transferring a program via the network.

Further, it should be stressed that the invention by no means is limited to the described preferred embodiment.

**Claims**

1. A method of processing a request to a Boolean rule having variables, by the use of an input signal having elements representing states of the variables, a stored rule base having elements arranged in terms, and an output signal having elements representing states of the variables;
   the elements in the rule base being capable of representing the Boolean states true or false for said variables, for an element in the rule base and an element in the input signal both representing a given variable, comparing the states of the input signal and the states of the terms in the rule base by means of logical operations; and updating the output signal with the result of the logical operations
   **characterized in that**
   the elements in said rule base are capable of representing a further state, indicating that a variable can take the state true as well as false.

2. The method according to claim 1, wherein the input signal, the output signal, and the terms in the rule base have a common set of states, each state in the common set being coded with the same bit values in the input signal, the output signal, and the terms.

3. The method according to claims 1-2, wherein the elements of the input signal and the terms represent one of the states: 'True' , 'False' or 'Tautology'.

4. The method according to claim 1, wherein the elements of said output signal represent one of the states: 'True', 'False', 'Tautology', or 'Contradiction'.

5. The method according to claims 3-4, wherein said states in the input signal, the output signal, and the rule base have the following two-bit values:

| 0 | 1 | 'True' |
|---|---|---|
| 1 | 0 | 'False' |
| 1 | 1 | 'Tautology' |
| 0 | 0 | 'Contradiction' |

6. The method according to claims 1-5, wherein said rule base further comprises a set of terms having binary elements, and wherein each term in said set of terms represents a single combination of states for the variables.

7. The method according to claims 1-6, wherein said terms represent only combinations which do not violate the Boolean rule, only combinations which do violate the Boolean rule, or all combinations plus an indication of whether a term violates the Boolean rule or not.

**EP 1 019 811 B1**

8. The method according to claims 1-7, wherein the method further comprises the step of generating said input signal as a subset of variables from a global input signal, and wherein said subset of variables is determined as those variables involved in said rule.

9. The method according to claims 1-8, wherein the method further comprises the step of generating a global output signal having variables wherein some of the variables are updated with variable states from said output signal.

10. The method according to claims 1-9, wherein all variables in said output signal are initialised with the symbolic representation 'Contradiction'.

11. The method according to claims 1-10, wherein a match is detected by comparing the elements of the input signal to the elements of the terms in the rule base, respectively, and if elements in the input signal represent a valid combination, then a match is defected.

12. The method according to claim 11, further comprising the following information retrieving strategy:

if no match is detected, then said output signal contains contradiction information;

if no variables are changed in said output signal, then nothing is deduced;

otherwise, said output signal is updated with the symbolic representations 'True' or 'False';

indicating the retrieved information to a user by means of a user interface.

13. A computer system having means for executing a program, where the program when executed is to make the computer execute the method according to claims 1-12.

14. A computer readable medium having a program recorded thereon, where the program when executed is to make the computer execute the method according to claims 1-12.

**Patentansprüche**

1. Verfahren zum Verarbeiten einer Anfrage an eine Boolesche Regel mit Variablen durch die Verwendung eines Eingangssignals mit Elementen, die Zustände der Variablen darstellen, einer gespeicherten Regelbasis mit Elementen, die in Termen angeordnet sind, und eines Ausgangssignals mit Elementen, die Zustände der Variablen darstellen;
wobei die Elemente in der Regelbasis in der Lage sind, die Booleschen Zustände "WAHR" oder "FALSCH" für die Variablen darzustellen,
Vergleichen der Zustände des Eingangssignals und der Zustände der Terme in der Regelbasis mittels logischer Operationen für ein Element in der Regelbasis und ein Element in dem Eingangssignal, die beide eine bestimmte Variable darstellen; und
Aktualisieren des Ausgangssignals mit dem Ergebnis der logischen Operationen,
**dadurch gekennzeichnet, dass**:

die Elemente in der Regelbasis in der Lage sind, einen weiteren Zustand darzustellen, der anzeigt, dass eine Variable sowohl den Zustand "WAHR" als auch "FALSCH" annehmen kann.

2. Verfahren nach Anspruch 1, wobei das Eingangssignal, das Ausgangssignal und die Terme in der Regelbasis einen gemeinsamen Satz von Zuständen aufweisen und jeder Zustand in dem gemeinsamen Satz mit den gleichen Bitwerten in dem Eingangssignal, dem Ausgangssignal und den Termen kodiert ist.

3. Verfahren nach einem der Ansprüche 1-2, wobei die Elemente des Eingangssignals und die Terme einen der Zustände "WAHR", "FALSCH" oder "TAUTOLOGIE" darstellen.

4. Verfahren nach Anspruch 1, wobei die Elemente des Ausgangssignals einen der Zustände "WAHR", "FALSCH", "TAUTOLOGIE" oder "WIDERSPRUCH" darstellen.

**5.** Verfahren nach den Ansprüchen 3-4, wobei die Zustände in dem Eingangssignal, dem Ausgangssignal und der Regelbasis die folgenden Zwei-Bit-Werte haben:

| 0 | 1 | "WAHR" |
|---|---|---|
| 1 | 0 | "FALSCH" |
| 1 | 1 | "TAUTOLOGIE" |
| 0 | 0 | "WIDERSPRUCH" |

**6.** Verfahren nach den Ansprüchen 1-5, wobei die Regelbasis des Weiteren einen . Satz von Termen mit Binärelementen umfasst und wobei jeder Term in dem Satz von Termen eine einzelne Kombination von Zuständen für die Variablen darstellt.

**7.** Verfahren nach den Ansprüchen 1-6, wobei die Terme nur Kombinationen, die die Boolesche Regel nicht verletzen, nur Kombinationen, die die Boolesche Regel verletzen, oder alle Kombinationen zuzüglich einer Anzeige dahingehend darstellen, ob ein Term die Boolesche Regel verletzt oder nicht.

**8.** Verfahren nach den Ansprüchen 1-7, wobei das Verfahren des Weiteren den Schritt des Erzeugens des Eingangssignals als einen Teilsatz von Variablen aus einem globalen Eingangssignal umfasst und wobei der Teilsatz von Variablen als die Variablen bestimmt wird, die in der Regel eingeschlossen sind.

**9.** Verfahren nach den Ansprüchen 1-8, wobei das Verfahren des Weiteren den Schritt des Erzeugens eines globalen Ausgangssignals mit Variablen umfasst, wobei einige der Variablen mit Variablen-Zuständen von dem Ausgangssignal aktualisiert sind.

**10.** Verfahren nach den Ansprüchen 1-9, wobei alle Variablen in dem Ausgangssignal mit der symbolischen Darstellung "WIDERSPRUCH" initialisiert werden.

**11.** Verfahren nach den Ansprüchen 1-10, wobei eine Übereinstimmung erfasst wird, indem die Elemente des Eingangssignals jeweils mit den Elementen der Terme in der Regelbasis verglichen werden, und, wenn Elemente in dem Eingangssignal eine gültige Kombination darstellen, eine Übereinstimmung erfasst wird.

**12.** Verfahren nach Anspruch 11, das des Weiteren die folgende Informations-Wiedergewinnungsstrategie umfasst:

wenn keine Übereinstimmung erfasst wird, enthält das Ausgangssignal Widerspruchs-Informationen;

wenn keine Variablen in dem Ausgangssignal verändert sind; wird nichts deduziert;

ansonsten wird das Ausgangssignal mit den symbolischen Darstellungen "WAHR" oder "FALSCH" aktualisiert;

die wiedergewonnenen Informationen werden einem Benutzer mittels einer Benutzerschnittstelle angezeigt.

**13.** Computersystem, das eine Einrichtung zum Ausführen eines Programms aufweist, wobei das Programm, wenn es ausgeführt wird, den Computer das Verfahren nach den Ansprüchen 1-12 ausführen lässt.

**14.** Computerlesbares Medium, das ein darauf aufgezeichnetes Programm aufweist, wobei das Programm, wenn es ausgeführt wird, den Computer das Verfahren nach den Ansprüchen 1-12 ausführen lässt.

**Revendications**

**1.** Procédé de traitement d'une demande selon une règle booléenne ayant des variables, via l'utilisation d'un signal d'entrée ayant des éléments représentant des états des variables, une base de règles stockées ayant des éléments arrangés en termes, et un signal de sortie ayant des éléments représentant des états des variables ;

les éléments de la base de règles étant capables de représenter les états booléens vrai ou faux pour lesdites variables ;

pour un élément de la base de règles et un élément du signal d'entrée représentant chacun une variable donnée, comparer les états du signal d'entrée et les états des termes de la base de règles au moyen d'opérations logiques ; et

mettre à jour le signal de sortie avec le résultat des opérations logiques,

**caractérisé en ce que**

les éléments de ladite base de règles sont capables de représenter un autre état, indiquant qu'une variable peut aussi bien prendre l'état vrai que l'état faux.

2. Procédé selon la revendication 1, dans lequel le signal d'entrée, le signal de sortie et les termes contenus dans la base de règles ont un ensemble commun d'états, chaque état de l'ensemble commun étant codé avec les mêmes valeurs de bit dans le signal d'entrée, le signal de sortie et les termes.

3. Procédé selon les revendications 1 et 2, dans lequel les éléments du signal d'entrée et les termes représentent un des états : « Vrai », « Faux » ou « Tautologie ».

4. Procédé selon la revendication 1, dans lequel les éléments dudit signal de sortie représentent un des états : « Vrai », « Faux », « Tautologie » ou « Contradiction ».

5. Procédé selon les revendications 3 et 4, dans lequel lesdits états dans le signal d'entrée, le signal de sortie et la base de règles ont les valeurs à deux bits suivantes :

| 0 | 1 | « Vrai » |
|---|---|---|
| 1 | 0 | « Faux » |
| 1 | 1 | « Tautologie » |
| 0 | 0 | « Contradiction » |

6. Procédé selon les revendications 1 à 5, dans lequel ladite base de règles comprend en outre un ensemble de termes ayant des éléments binaires, et dans lequel chaque terme dudit ensemble de termes représente une combinaison unique d'états pour les variables.

7. Procédé selon les revendications 1 à 6, dans lequel lesdits termes représentent uniquement des combinaisons qui ne violent pas la règle booléenne, uniquement des combinaisons qui violent la règle booléenne, ou toutes les combinaisons plus une indication précisant si un terme viole, ou non, la règle booléenne.

8. Procédé selon les revendications 1 à 7, dans lequel le procédé comprend en outre l'étape consistant à générer ledit signal d'entrée comme un sous-ensemble de variables à partir d'un signal d'entrée global, et dans lequel ledit sous-ensemble de variables est déterminé comme les variables impliquées dans ladite règle.

9. Procédé selon les revendications 1 à 8, dans lequel le procédé comprend en outre l'étape consistant à générer un signal de sortie global ayant des variables parmi lesquelles certaines des variables sont mises à jour avec des états de variables à partir dudit signal de sortie.

10. Procédé selon les revendications 1 à 9, dans lequel toutes les variables dans ledit signal de sortie sont initialisées avec la représentation symbolique « Contradiction ».

11. Procédé selon les revendications 1 à 10, dans lequel une correspondance est détectée en comparant respectivement les éléments du signal d'entrée aux éléments des termes contenus dans la base de règles, et, si des éléments du signal d'entrée représentent une combinaison valide, une correspondance est alors détectée.

12. Procédé selon la revendication 11, comprenant en outre la stratégie suivante de récupération d'informations :

si aucune correspondance n'est détectée, ledit signal de sortie contient alors des informations en contradiction ;
si aucune variable n'est changée dans ledit signal de sortie, rien n'est alors déduit ;
sinon, ledit signal de sortie est mis à jour avec les représentations symboliques « Vrai » ou « Faux » ;
indiquant à un utilisateur les informations récupérées au moyen d'une interface utilisateur.

13. Système informatique ayant des moyens pour exécuter un programme, dans lequel le programme, lors qu'il est exécuté, consiste à faire exécuter par l'ordinateur le procédé selon les revendications 1 à 12.

**14.** Support lisible par un ordinateur comprenant un programme y étant enregistré, dans lequel le programme, lorsqu'il est exécuté, consiste à faire exécuter par l'ordinateur le procédé selon les revendications 1 à 12.

Fig. 1

```
                    ┌─────────────────┐
                    │      Start      │────── 1
                    └─────────────────┘
                             │
                             ▼
              ┌──────────────────────────────┐
              │  Initialize lists with no terms │──── 2
              │      Active List := { }        │
              │      Result List := { }        │
              │           T := { ]            │
              └──────────────────────────────┘
                             │
                             ▼
              ┌──────────────────────────────┐
              │   Select variable Q from f     │──── 3
              │     where Q is not in T         │
              └──────────────────────────────┘
                             │
                             ▼
              ┌──────────────────────────────┐
              │            Set                │──── 4
              │  T1 = {TQ}; T2 = {T!Q}; i :=0  │
              └──────────────────────────────┘
                             │
                             ▼
       5 ──── ┌──────────────────────────────┐
              │          i := i + 1            │
              └──────────────────────────────┘
                             │
                             ▼
   7          6              ◇
   │          U       Compute f(Ti)        T        8
   ▼       ┌──────┐                     ┌──────────┐
 ┌──────────┐                          ┌──────────┐
 │ Add Ti to │                         │ Add Ti to │
 │ Active List│           F            │ Result List│
 └──────────┘                          └──────────┘
                             │
                             ▼
       9 ────               ◇
                    i = 2            F
                             │
                             T
                             ▼
      10 ────               ◇
                  Active List empty        T ──► ┌──────┐  12
                             │                   │ End  │
                             F                   └──────┘
                             ▼
      11 ──── ┌──────────────────────────────┐
              │  Pick term T out of ActiveList │
              └──────────────────────────────┘
```

" => "

'or'

X                    Y

Z

## Fig. 2

301

302

309          308

A

B

C                         303

D                              304          305          307          306

E          B                    Scan                    B
                                Comp.
F          E                                             E
                    D                                   D
G                   I          Scan                      I
                              Uncomp.
H

I                                          310

J

K

A

B

C

D

E

F

G

H

I

J

K

## Fig. 3

Start — 413

↓

Generate local input state vector — 414

↓

Scan uncompressed terms — 415

↓

Scan compressed terms — 416

↓

Extract information from scanning — 417

↓

End — 418

## Fig. 4

Start 519

i := 0 520

i := i + 1 521

522

T    StateVector[Formula.VL[i]]    F

523    UB    524    525

ISV.S1[i] := 0    ISV.S1[i] := 1    ISV.S1[i] := 1
ISV.S2[i] := 1    ISV.S2[i] := 1    ISV.S2[i] := 0

526

i < |Formula.VL|    Y

N

Fig. 5

A    527

A  — 527

OSV.S1 := 0
OSV.S2 := 0
BV := not(ISV.S1 and ISV.S2)
TV := BV and ISV.S2
AnyMatch := False

— 627

i := 0  — 628

i := i + 1  — 629

i > |Formula.PIL|  — 630

T

B  — 633

F

Match?
TV = Formula.PIL[i] and BV  — 631

F

T

OSV.S1 := OSV.S1 or not(Formula.PIL[i])
OSV.S2 := OSV.S2 or Formula.PIL[i]
AnyMatch := True

— 632

Fig. 6

Fig. 7

**Fig. 8**

C — 738

AnyMatch — 838

F → Contradiction End — 839

T

840 — CH := (ISV.S1 xor OSV.S1) or (ISV.S2 xor OSV.S2) and not(BV)
i := 0

841 — CH = 0

T → ok, nothing deduced End — 842

F

i := i + 1 — 843

844 — i > |Formula.VL|

T → End — 849

F

845 — CH[i] = True

T

F

846 — OSV[i].S1 = 0

T

F

847 — StateVector[Formula.VL[i]] := True

848 — StateVector[Formula.VL[i]] := False